# EUROPEAN PATENT SPECIFICATION

(11) **EP 2 574 404 B1**
(45) Date of publication and mention of the grant of the patent: **17.10.2018**
(21) Application number: 11191008.9
(22) Date of filing: 28.11.2011
(51) Int. Cl.: B02B 3/00, B02B 3/04

(54) **PROCESS FOR DEHULLING OATS WITHOUT REMOVING PLUMULES**
VERFAHREN ZUM SCHÄLEN VON HAFER OHNE ENTFERNUNG DER SPROSSKNOSPEN
PROCÉDÉ POUR ÉCOSSER L'AVOINE SANS RETIRER LES GERMES

(30) Priority: 29.09.2011 WO PCT/CN2011/080364
(43) Date of publication of application: 03.04.2013
(73) Proprietor: Inner Mongolia Sanzhuliang Natural Oats Industry Corporation, Baotou City, Inner Mongolia 014010 (CN)
(72) Inventor: Sun, Zhi, Inner Mongolia 014010 (CN)
(74) Representative: Nony

(56) References cited:
- CN-A- 101 264 459
- CN-A- 101 912 797
- CN-A- 102 049 326
- GB-A- 672 229
- US-A- 4 978 078
- US-A- 5 702 748

## Description

### Field of the Invention

The present application relates to a process for machining oats, and further to a process for dehulling oats, more particularly to a process for dehulling oats without removing plumules.

### Background of the Invention

An oat, which is also called bromegrass or wild rye, is a gramineous annual herbaceous crop, and divided into hulled oats and hull-less oats. Most of the oats cultivated over the world are hulled oats which are also called Avena Sativa. In China, most of the cultivated oats are hull-less oats which are also called naked oats. The naked oats are variously called avena nuda in the north of China, jade oat in the north west of China, oat or avena nuda in the south west of China, and bell oats in the north east of China. The oats have been cultivated in China for over 2000 years in provinces such as inner Mongolia, Hebei, Shanxi and Shǎnxi. Also, the oats are grown in countries and regions like Canada, United States, Europe Union, Australia, Korea, Japan and Israel.

The oats are enriched with protein, amino acids, small molecular active peptides, dietary fibre, β-dextran, unsaturated fatty acids, and numerous microelements such as calcium, phosphor, iron, etc., and therefore of a great economic value. The oats are of a high nutritive value. Particularly, according to comprehensive analysis conducted by the Institute of Health of Chinese Academy of Medical Sciences, the naked oats grown in China contain about 15.6% of crude protein, about 8.5% of fat, heat releasing starch, and elements such as phosphor, calcium and iron, are superior to the other 8 kinds of foods. The water-soluble dietary fibre of oats are 4.7 times and 7.7 times more than wheat and corn respectively. The oats are enriched with vitamin B, nicotinic acid, folacin and pantothenic acid. Particularly, every 100 grams of oat powder contains up to 15 grams of vitamin E. In addition, the oat powder contains saponins (i.e. a primary component of ginseng) which are absent from the other cereals. The oat protein contains relatively complete amino acids, for example 8 kinds of most amino acids necessary for human body, especially lysine of an amount up to 0.68 gram. The oats are of a high value of medical health care, which has been well acknowledged in the medical field in China and other countries. According to five groups of trials on animals and three groups of 997 clinical observation and researches, which were conducted by 18 medical entities including Chinese Academy of Agricultural Sciences, Beijing Cardiovascular Research Center, Beijing Haidian Hospital, etc. from 1981 to 1985 showed that the oats can prevent and treat cardiovascular diseases caused by hyperlipidemia. That is, the administration of the naked oat flakes for 3 months (e.g. 100 grams of naked oat flakes per day) can significantly lower contents of cholesterol, triglyceride and β-lipoproteins in the cardiovisceral vessel and liver, with a total effective rate of up to 87.2% without any side effect, which is similar with that achieved by an existing medicine called Clofibrate. The oat flakes also have a significant curative effect on the secondary hyperlipaemia caused by pathological changes of liver and kidney, diabetes mellitus, fatty liver, etc. Long-term intake of oat flakes facilitates suppressing of diabetes mellitus and adiposis. The oat flakes are valuable forage in that the oat flakes and oat straw are succulent and tender and thus are suitable for eating. A report by Livestock Feeding Sciences shows that the straw of naked oats, which is one of the best forage, contains 5.2% of crude protein, 2.2% of crude fat, 44.6% of non- nitrogen extraction which are higher than those of millet straw, wheat straw, and corn straw, but contains 28.2% of indigestible fibre which is lower than those of wheat straw, corn straw and millet straw by 4.9∼16.4%, respectively. Oat seeds are excellent forage for feeding young, old and sick livestock, farm livestock, and poultry such as chicken and pigs.

An oat plumule, which is a part of an oat seed embryo, contains a growing point and a young leaf, and forms a hypocotyl with an embryo stem and an embryo root. The oat plumule is located at the upper end of the hypocotyl, and will grow into parts such as the stem, branches and leaves after the seed germinates. The plumule is a source of the oat life, and is a part of the oat with the most nutritive value. Measurements show that the oat plumule contains over 30% of protein, among which 18.9% is globulin, 0.3%∼0.37% is glutenin, and over 14% is gliadin, which is an important nutrition source of plant protein. The plumule protein of oats is of good quality, is enriched with 8 kinds of amino acids necessary for human body and comprises 34.74% of total amino acids, among which lysine presents in an amount of 1.85%. The biological titer of oat protein is comparative with that of an egg enriched with protein. Vitamins B1 and B2, iron and kalium contained in the oats are respectively 3, 8, 4 and 8 times of those contained in the equal amount of flour. Furthermore, the oats are enriched with zinc. Every 100 grams of oat plumule oil contains vitamin E of 220 microgrammes, which is 13 times of that of soybean oil, and 4 times of that of cod-liver oil, thus the oat plumule oil is one of those known foods with the most vitamin E.

The existing technology for dehulling oats, which is substantially the same as that for dehulling wheat and rice, abrades the hull of oats using an abrasive roller in the dehulling device. Chinese Patent Application Publication No. 101264459 A has disclosed a typical dehulling device and dehulling process, and the dehulling device includes: a frame, a feeder, a propeller, an abrasive roller assembly and driving means, with the feeder, the propeller, the abrasive roller assembly and the driving means being disposed on the frame. The propeller that is connected to a power output end of the driving means is arranged within the feeder, a lower end of the propeller passes through an outlet of the feeder and is connected to the abrasive roller assembly, an abrasive pad is arranged around the abrasive roller assembly, with a distance between the abrasive pad and the abrasive roller assembly being 1∼10mm, and a dehulling chamber is formed between the abrasive pad and the abrasive roller assembly, with a lower end of the dehulling chamber being a discharge opening. The dehulling process using such dehulling device includes: placing oats to be dehulled into a feeder of the dehulling device; transferring the oats to a dehulling chamber between an abrasive roller assembly and an abrasive pad by a propeller in the feeder, with the propeller being driven by a driving means; spirally moving the oats downward by the driving of the abrasive roller assembly within the dehulling chamber; dehulling the oats by the abrasive roller assembly and the abrasive pad during the spiral movement of the oats; discharging the dehulled oat grains via a discharge opening of the dehulling device.

Although the oats can be effectively dehulled and the resultant oat grains can be intact using the existing dehulling device and process, the dehulling strength applied to the oats is relatively large during the dehulling procedure. The oat plumules, which are located at the upper end of hypocotyls, may contact the abrasive roller, and therefore would be removed as well in the dehulling procedure in the prior art. As a result, the prior art suffers from the lost of parts of the most nutritive value since the plumules are the most nutritively valuable of the oats. Therefore, a technical problem with the prior art is to dehulling oats without removing plumules.

The document US4978078A discloses a discoid element for a helical screw or worm arrangement comprising, on each side, identical shallow depressions; each depression having an open end adjacent the periphery and a closed end adjacent a central bore. The depressions in one side of the discoid element are staggered with respect to those of the other side. The discoid element may also contain radial ribs constituting the side- walls of the shallow depressions. The discoid elements may suitably be used in apparatus for dehusking grain.

The document GB672229A discloses that oats which have had their moisture content adjusted to 13-19 percent are shelled by subjecting them to impact against a surface and regulating the impact velocity in relation to the moisture content of the oats in such a manner as to obtain a high' yield of hulled grains with a low proportion of broken kernels. Either or both the velocity and moisture content may be varied. Unhulled grains remaining after the hulling operation are separated from the kernels obtained and subjected to one or more further hulling operations one at least of which is carried out at a lower moisture content or lower impact velocity. As shown the oats are fed into an apparatus via a funnel in which they are flung against the walls of an annulus through tubes rotated by a motor the material falling and discharging through an outlet.

The document CN101912797A discloses a method for improving yield of embryo rice, which comprises the following steps of: hulling rice at a low speed to remove rice hull by using a rice huller, and hulling the rice twice at the low speed, namely after the rice with complete embryo after the rice hull is removed by low-speed hulling is put into a rice machine, performing primary low rotational speed coarse scrape to remove outer oil skin, and performing one-time fine scrape at a lower rotational speed to remove the rest inner oil skin so as to completely remove the oil skin and obtain the embryo rice on the premise of ensuring the completeness of the rice embryo. By adopting the processing method, the whole embryo rice processing process is at the low rotational speed all the time; and because the one-time fine scrape for removing the skin is increased, high temperature and excessive extrusion are never produced to greatly ensure the nutrition of the rice and the completeness of the embryo and greatly improve the yield of the embryo rice.

The document CN102049326A relates to an impact hulling and degerming machine. During design, a gap between a rotor pin and a stator pin is set a certain specified value in a range of 0.5mm to 2.5mm according to material particle characteristics and process requirements, and a set of speed-changing device capable of adjusting the rotating speed during the equipment operating is arranged so that most of the endosperms are separated from bran and embryos on the premise of obviously reducing the breakage rate of embryos and bran; therefore, the existing impact crushing equipment has hulling and degerming function superior to that of an existing teeth-roller flour mill. The embryo extraction quantity in a flour production line is improved by 3 to 5 times in the wheat flour milling industry, the anterior high-quality flour yield and total flour extraction rate are obviously improved, the investment on equipment and civil engineering is greatly reduced, the energy consumption is reduced, and the comprehensive economic efficiency of the flour production line is obviously improved.

The document US 5702748A relates to an apparatus that achieves improvements in weight recovery ratio and processing capability in the separation of a protein-rich component from brewer's spent grain (BSG), without reducing the protein content in the protein-rich product, and thus makes it possible to reuse BSG as an inexpensive, but superior, protein-rich resource. Brewer's spent grain in a wet state is supplied to a roll mill having a pair of rolls provided with cutting edges and rotating at a predetermined rotational speed ratio, whereby the protein-rich product of the BSG is crushed and peeled from the husk component.

### Summary of the Invention

In view of the drawbacks in the prior art, an object of the present invention is to provide a process for dehulling oats according to independent claim 1, which enables the retaining of plumules and the intactness of oat grains while the oats are dehulled, so that nutritional ingredients of the oats can be retained to the maximum degree. Further improvements and embodiments are provided in the dependent claims.

In the process for dehulling oats of the invention, the dehulling strength is reduced and a dehulling effect is improved by lowering the dehulling speed and prolonging dehulling duration, so that the resultant oat grains can remain intact and plumules can be retained on the oat grains, obtaining an improved dehulling effect simultaneously.

All types of oats are applicable to the present invention, and the oats are preferably naked oats.

The dehulling speed in the invention can be lowered by 20%∼40%, preferably by 25%∼35%, and more preferably 30% in comparison with the prior art.

The lowering of the dehulling speed in the invention can be implemented with the control of a main shaft rotating speed of dehulling mechanism. The main shaft rotating speed of dehulling mechanism in the prior art is usually 680-1130rpm. In the present invention, however, the main shaft rotating speed is in a range of 400-650rpm, preferably 450∼640rpm, and more preferably 500∼600rpm.

In a preferable approach of lowering the dehulling speed, both the rotating speed of the main shaft and the power of the driving means are preferably lowered. The power of the driving means is preferably lowered by 5%∼20%, preferably 8%∼15%, and more preferably 10%∼12%. The power of the dehulling means in the prior art is usually 18.5∼22kW With the process of the present invention, however, the power of the driving means is limited to a range from 14.8kW to 21kW, preferably from 15kW to 20kW, and more preferably from 16.5kW to 19.5kW, for example 17kW, 17.5kW, 18kW, 18.5kW or 19kW.

The lowering of power of the dehulling device may be implemented by controlling the output of the driving means of the dehulling device, for example, by controlling a voltage and/or current of the driving means. As is well-known, the power is directly proportional to the voltage and current, the power may be lowered by lowering separately the voltage or current, for example by 5%∼20%, or by lowering both the voltage and current by 10%.

Although the dehulling duration may be prolonged in the case of a single dehulling device if it is adapted in structure, the dehulling duration is prolonged in the invention by connecting in series a plurality of dehulling devices instead of modifying the single dehulling device. 2-6 dehulling devices, preferably 2-5 dehulling devices, and more preferably 2-4 dehulling devices, for example 3 dehulling devices are connected in series in the invention.

The inventor found that the dehulling duration is excessively long with more than 6 dehulling devices connected in series, as a result, the resultant oat grains cannot remain intact, and plumules are removed. Therefore, up to 6 dehulling devices are connected in series in the invention for the control of the prolonged dehulling duration. If merely a single dehulling device without any adaptation is employed and the dehulling speed is reduced, the oats cannot be effectively dehulled although plumules might be retained and the oat grains might remain intact, as a result, partial oat grains are not dehulled and cannot be commercially available or for further usage. Therefore, 2-6 dehulling devices connected in series are necessary for effective dehulling, with plumules being retained.

The dehulling device as disclosed in Chinese Patent Application Publication No. 101264459 A is preferably used in the invention, but the invention is in no way limited to the particular dehulling device. The dehulling device used in the process of the invention includes: a frame, a feeder, a propeller, an abrasive roller assembly and driving means, with the feeder, the propeller, the abrasive roller assembly and the driving means being disposed on the frame. The propeller that is connected to a power output end of the driving means is arranged within the feeder, a lower end of the propeller passes through an outlet of the feeder and is connected to the abrasive roller assembly, an abrasive pad is arranged around the abrasive roller assembly, with a distance between the abrasive pad and the abrasive roller assembly being 1-10mm, and a dehulling chamber is formed between the abrasive pad and the abrasive roller assembly, with a lower end of the dehulling chamber being a discharge opening.

Preferably, the feeder includes a feeding cylinder and a taper funnel. The feeding cylinder is arranged on the taper funnel, with an outlet of the feeding cylinder corresponding to a feeding inlet of the taper funnel, and a discharging opening arranged at the lower part of the taper funnel acting as the discharging opening of the feeder.

Preferably, the propeller is spiral, and includes a cylindrical body and protrusive screw thread arranged on the external surface of the cylindrical body.

Preferably, the abrasive roller assembly includes a core rack and an abrasive roller, an upper end of the core rack is fixedly connected to the lower end of the propeller, the abrasive roller is arranged on the core rack, and surface roughness of the abrasive roller is of a mesh size in the range from 30 to 60.

Preferably, the roughness of the abrasive pad is also of a mesh size in the range from 30 to 60.

Preferably, a feeding sleeve is provided on the inner wall of the feeder that corresponds to the propeller.

Preferably, a pressure board is provided at the discharging opening of the dehulling chamber, and a discharging funnel is further provided under the discharging opening. An air pipe is provided on the discharging funnel.

In the process for dehulling oats without removing plumules of the invention, 2-6 dehulling devices are connected in series, with a main shaft rotating speed of dehulling mechanism of each of the dehulling devices being set in the range from 400rpm to 650rpm, and power of the dehulling device being set in the range from 14.8kW to 21kW, for the purpose of dehulling.

The dehulling of oats may preferably include: placing oats to be dehulled (i.e. peeled) into a feeder of the dehulling device; transferring the oats to a dehulling chamber between an abrasive roller assembly and an abrasive pad by a propeller in the feeder, with the propeller being driven by a driving means; spirally moving the oats downward by the driving of the abrasive roller assembly within the dehulling chamber; dehulling the oats by the abrasive roller assembly and the abrasive pad during the spiral movement of the oats; discharging the dehulled oat grains via a discharge opening and transferring the discharged oat grains to the following dehulling device; and obtaining oat products with plumules at the discharge opening of the dehulling device at the last stage.

Surprisingly, with the process for dehulling oats of the invention, more than 99.5% of plumules are retained, which cannot be achieved by the existing dehulling technology. Therefore, an unpredictable technical effect has been achieved by the present invention.

The present invention is advantageous over the prior art in that oats can be effectively dehulled, the resultant oat grains remain intact and plumules are retained on the oat grains, by lowering the speed of oat dehulling and prolonging dehulling duration.

### Detailed Description of the Embodiments

Embodiments of the present invention are described below to illustrate the invention. It will be appreciated by those skilled in the art that the embodiments are provided for the better understanding of the invention, and in no way for limiting the present invention.

In a first example, for the purpose of dehulling oats, six dehulling devices as disclosed in Chinese Patent Application Publication No. CN 101264459 A are connected in series, with a main shaft rotating speed of dehulling mechanism of each of the dehulling devices being set as 650 rpm (i.e. revolutions per minute), and power of the dehulling device being set as 14.8 kW.

The dehulling of oats may include: placing oats to be dehulled (i.e. peeled) into a feeder of the dehulling device; transferring the oats to a dehulling chamber between an abrasive roller assembly and an abrasive pad by a propeller in the feeder, with the propeller being driven by a driving means; spirally moving the oats downward by the driving of the abrasive roller assembly within the dehulling chamber; dehulling the oats by the abrasive roller assembly and the abrasive pad during the spiral movement of the oats; discharging the dehulled oat grains via a discharge opening and transferring the discharged oat grains to the following dehulling device; and obtaining oat products with plumules at the discharge opening of the dehulling device at the last stage.

The sampling and verifying of the resultant oat products begins after the initial running of the dehulling device that lasts for 1 hour. For example, 6 oat product samples, each of which contains 1000 oat grains, are taken respectively at further 5 minutes, 15 minutes, 25 minutes, 35 minutes, 45 minutes and 60 minutes after the initial running for verification. The verification shows that the 6 oat product samples include respectively 8, 6, 0, 4, 7 and 1 oat grain without plumule, with the rest of the oat product samples remaining in intact shapes and keeping plumules.

In a second example, for the purpose of dehulling oats, it is the same case as in the first example except that two (instead of six) dehulling devices are connected in series, with a main shaft rotating speed of dehulling mechanism of each of the dehulling devices being set as 400 rpm, and power of the dehulling device being set as 21 kW.

The same sampling and verifying procedures of the resultant oat products as those in the first example are conducted, and the verification shows that the 6 oat product samples include respectively 3, 5, 6, 1, 0 and 2 oat grains without plumule, with the rest of the oat product samples remaining in intact shapes and keeping plumules.

In a third example, for the purpose of dehulling oats, it is the same case as in the first example except that four (instead of six) dehulling devices are connected in series, with a main shaft rotating speed of dehulling mechanism of each of the dehulling devices being set as 500 rpm, and power of the dehulling device being set as 18.5 kW.

The same sampling and verifying procedures of the resultant oat products as those in the first example are conducted, and the verification shows that the 6 oat product samples include respectively 5, 2, 7, 3, 5 and 3 oat grains without plumule, with the rest of the oat product samples remaining in intact shapes and keeping plumules.

In a comparative example, for the purpose of dehulling oats, one dehulling device as disclosed in Chinese Patent Application Publication No. CN 101264459 A is employed, with a main shaft rotating speed of dehulling mechanism of the dehulling device being set as 680 rpm, and power of the dehulling device being set as 18.5 kW.

The dehulling of oats may include: placing oats to be dehulled into a feeder of the dehulling device; transferring the oats to a dehulling chamber between an abrasive roller assembly and an abrasive pad by a propeller in the feeder, with the propeller being driven by a driving means; spirally moving the oats downward by the driving of the abrasive roller assembly within the dehulling chamber; dehulling the oats by the abrasive roller assembly and the abrasive pad during the spiral movement of the oats; and discharging the dehulled oat grains via a discharge opening, obtaining oat products with plumules.

The sampling and verifying of the resultant oat products begins after the initial running of the dehulling device that lasts for 1 hour. For example, 6 oat product samples, each of which contains 1000 oat grains, are taken respectively at further 5 minutes, 15 minutes, 25 minutes, 35 minutes, 45 minutes and 60 minutes after the initial running for verification. The verification shows that all oat grains of the 6 oat product samples cannot keep plumules.

With the comparison above, the solution of the present invention enables both dehulling of the oats and retaining of plumules on the oats, by lowering the speed of dehulling and prolonging the dehulling duration. In the prior art, however, the dehulling process cannot retain the plumules.

It shall be noted that the above embodiments are provided for illustrating the dehulling device and process of the present invention in detail, but in no way for limiting the invention to the particular dehulling device and process. That is, the implementation of the present invention does not necessarily depend on the particular dehulling device and process described above. It will be appreciated by those skilled in the art that any improvement, equivalent substituent materials, added auxiliary components, alternative options will fall within the scope of the present invention.

## Claims

1. A process for dehulling oats without removing plumules, **characterized by** :
connecting 2 to 6 dehulling devices in series for dehulling oats, wherein each dehulling device comprises a dehulling mechanism;
controlling a main shaft rotating speed of each dehulling mechanism to be in a range of 400-650 revolutions per minute (rpm); and
controlling power of a driving means of each dehulling device to be in a range of 14.8kW to 21kW;
wherein the dehulling devices also comprise: a frame, a feeder, a propeller, an abrasive roller assembly and driving means, wherein the feeder, the propeller, the abrasive roller assembly and the driving means are disposed on the frame, the propeller that is connected to a power output end of the driving means is arranged within the feeder, a lower end of the propeller passes through an outlet of the feeder and is connected to the abrasive roller assembly, an abrasive pad is arranged around the abrasive roller assembly, with a distance between the abrasive pad and the abrasive roller assembly being 1-10mm, and a dehulling chamber is formed between the abrasive pad and the abrasive roller assembly, with a lower end of the dehulling chamber being a discharge opening.

2. The process of claim 1, wherein the main shaft rotating speed of the dehulling devices is in a range of 450-640 rpm, and more preferably in a range of 500-600 rpm.

3. The process of any one of claims 1-2, wherein power of the dehulling devices is controlled to a range from 15kW to 20kW, and more preferably a range from 16.5kW to 19.5kW, for example, 17kW, 17.5kW, 18kW, 18.5kW or 19kW.

4. The process of any one of claims 1-3, wherein 2-5 dehulling devices, more preferably 2-4 dehulling devices, for example 3 dehulling devices, are connected in series to prolong the dehulling duration.

5. The process of claim 1, wherein the dehulling of the oats comprises: placing oats to be dehulled into a feeder of the dehulling device; transferring the oats to a dehulling chamber between an abrasive roller assembly and an abrasive pad by a propeller in the feeder, with the propeller being driven by a driving means; spirally moving the oats downward by the driving of the abrasive roller assembly within the dehulling chamber; dehulling the oats by the abrasive roller assembly and the abrasive pad during the spiral movement of the oats; discharging the dehulled oat grains via a discharge opening of the dehulling device and transferring the discharged oat grains to the following dehulling device; and obtaining oat products with plumules at a discharge opening of the last dehulling device.

## Patentansprüche

1. Verfahren zum Schälen von Hafer ohne Entfernung der Sprossknospen, **gekennzeichnet durch**:
Verbinden von 2 bis 6 Schälvorrichtungen in Reihe zum Schälen von Hafer, wobei jede Schälvorrichtung einen Schälmechanismus umfasst;
Steuern einer Rotationsgeschwindigkeit einer Hauptwelle von jedem Schälmechanismus, so dass sie in einem Bereich von 400 bis 650 Umdrehungen pro Minute (UpM) liegt; und
Steuern der Leistung eines Antriebsmittels jeder Schälvorrichtung, so dass sie in einem Bereich von 14,8 kW bis 21 kW liegt;
wobei die Schälvorrichtungen auch umfassen:
einen Rahmen, eine Speiseeinrichtung, einen Propeller, eine Schleifwalzenanordnung und Antriebsmittel, wobei die Speiseeinrichtung, der Propeller, die Schleifwalzenanordnung und das Antriebsmittel auf dem Rahmen angeordnet sind, der Propeller, der mit einem Leistungsabgabeende des Antriebsmittels verbunden ist, innerhalb der Speiseeinrichtung angeordnet ist, ein unteres Ende des Propellers einen Auslass der Speiseeinrichtung durchläuft und mit der Schleifwalzenanordnung verbunden ist, ein Schleifpad um die Schleifwalzenanordnung herum angeordnet ist, wobei ein Abstand zwischen dem Scheifpad und der Schleifwalzenanordnung 1 bis 10 mm beträgt, und eine Schälkammer zwischen dem Schleifpad und der Schleifwalzenanordnung gebildet wird, wobei ein unteres Ende der Schälkammer eine Austragsöffnung ist.

2. Verfahren nach Anspruch 1, wobei die Rotationsgeschwindigkeit der Hauptwelle der Schälvorrichtungen in einem Bereich von 450 bis 640 UpM und bevorzugter in einem Bereich von 500 bis 600 UpM liegt.

3. Verfahren nach einem der Ansprüche 1 bis 2, wobei die Leistung der Schälvorrichtungen auf einen Bereich von 15 kW bis 20 kW und bevorzugter einen Bereich von 16,5 kW bis 19,5 kW, beispielsweise 17 kW, 17,5 kW, 18 kW, 18,5 kW oder 19 kW gesteuert wird.

4. Verfahren nach einem der Ansprüche 1 bis 3, wobei 2 bis 5 Schälvorrichtungen, bevorzugter 2 bis 4 Schälvorrichtungen, beispielsweise 3 Schälvorrichtungen, in Reihe verbunden sind, um die Dauer des Schälens zu verlängern.

5. Verfahren nach Anspruch 1, wobei das Schälen des Hafers umfasst: Platzieren von zu schälendem Hafer in einer Speiseeinrichtung der Schälvorrichtung; Überführen des Hafers in eine Schälkammer zwischen einer Schleifwalzenanordnung und einem Schleifpad durch einen Propeller in der Speiseeinrichtung, wobei der Propeller durch ein Antriebsmittel angetrieben wird; spiraliges Bewegen des Hafers abwärts durch das Antreiben der Schleifwalzenanordnung innerhalb der Schälkammer; Schälen des Hafers durch die Schälwalzenanordnung und das Schälpad während der Spiralbewegung des Hafers; Austragen der geschälten Haferkörner über eine Austragsöffnung der Schälvorrichtung, und Überführen der ausgetragenen Haferkörner in die folgende Schälvorrichtung; und Erhalten von Haferprodukten mit Sprossknospen an einer Austragsöffnung der letzten Schälvorrichtung.

## Revendications

1. Procédé d'écossage de l'avoine sans retirer les plumules, **caractérisé par** les étapes suivantes:
connecter de 2 à 6 dispositifs d'écossage en série pour écosser l'avoine, dans lequel chaque dispositif d'écossage comprend un mécanisme d'écossage;
commander une vitesse de rotation d'arbre principal de chaque dispositif d'écossage pour qu'elle se situe dans une gamme de 400 à 500 tours par minute (tpm); et
commander la puissance d'un moyen d'entraînement de chaque dispositif d'écossage pour qu'elle se situe dans une gamme de 14,8 kW à 21 kW;
dans lequel les dispositifs d'écossage comprennent également un cadre, un dispositif d'alimentation, un propulseur, un ensemble de rouleau abrasif et un moyen d'entraînement, dans lequel le dispositif d'alimentation, le propulseur, l'ensemble de rouleau abrasif et le moyen d'entraînement sont disposés sur le cadre, le propulseur qui est connecté à une extrémité de sortie de puissance du moyen d'entraînement est agencé à l'intérieur du dispositif d'alimentation, une extrémité inférieure du propulseur passe à travers une sortie du dispositif d'alimentation et est connectée à l'ensemble de rouleau abrasif, un tampon abrasif est agencé autour de l'ensemble de rouleau abrasif, avec une distance entre le tampon abrasif et l'ensemble de rouleau abrasif comprise entre 1 mm et 10 mm, et une chambre d'écossage est formée entre le tampon abrasif et l'ensemble de rouleau abrasif, avec une extrémité inférieure de la chambre d'écossage qui est une ouverture de décharge.

2. Procédé selon la revendication 1, dans lequel la vitesse de rotation d'arbre principal des dispositifs d'écossage est comprise dans une gamme de 450 à 640 tpm, et mieux encore dans une gamme de 500 à 600 tpm.

3. Procédé selon l'une quelconque des revendications 1 ou 2, dans lequel la puissance des dispositifs d'écossage est commandée pour se situer dans une gamme de 15 kW à 20 kW, et mieux encore dans une gamme de 16,5 kW à 19,5 kW, par exemple, 17 kW, 17,5 kW, 18 kW, 18,5 kW ou 19 kW.

4. Procédé selon l'une quelconque des revendications 1 à 3, dans lequel de 2 à 5 dispositifs d'écossage, mieux encore de 2 à 4 dispositifs d'écossage, par exemple 3 dispositifs d'écossage sont connectés en série dans le but de prolonger la durée de l'écossage.

5. Procédé selon la revendication 1, dans lequel l'écossage de l'avoine comprend le placement de l'avoine à écosser dans un dispositif d'alimentation du dispositif d'écossage; le transfert de l'avoine à une chambre d'écossage entre un ensemble de rouleau abrasif et un tampon abrasif par un propulseur dans le dispositif d'alimentation, dans lequel le propulseur est entraîné par un moyen d'entraînement; le déplacement hélicoïdal de l'avoine vers le bas par l'actionnement de l'ensemble de rouleau abrasif à l'intérieur de la chambre d'écossage; l'écossage de l'avoine par l'ensemble de rouleau abrasif et le tampon abrasif pendant le déplacement hélicoïdal de l'avoine; le déchargement des grains d'avoine écossés par l'intermédiaire d'une ouverture de décharge du dispositif d'écossage et le transfert des grains d'avoine déchargés au dispositif d'écossage suivant; et la récupération de produits d'avoine avec leurs plumules à une ouverture de décharge du dernier dispositif d'écossage.
